# EUROPÄISCHE PATENTSCHRIFT

(11) **EP 1 771 641 B1**
(45) Veröffentlichungstag und Bekanntmachung des Hinweises auf die Patenterteilung: **06.03.2019**
(21) Anmeldenummer: 05769846.6
(22) Anmeldetag: 28.07.2005
(51) Int. Cl.: F01K 25/06

(54) **VERFAHREN UND VORRICHTUNG ZUR ÜBERTRAGUNG VON WÄRME VON EINER WÄRMEQUELLE AN EINEN THERMODYNAMISCHEN KREISLAUF MIT EINEM ARBEITSMITTEL MIT ZUMINDEST ZWEI STOFFEN MIT NICHT-ISOTHERMER VERDAMPFUNG UND KONDENSATION**
METHOD AND DEVICE FOR THE TRANSFER OF HEAT FROM A HEAT SOURCE TO A THERMODYNAMIC CIRCUIT WITH A WORKING MEDIUM OF AT LEAST TWO SUBSTANCES WITH NON-ISOTHERMAL EVAPORATION AND CONDENSATION
PROCEDE ET DISPOSITIF POUR TRANSFERER DE LA CHALEUR D'UNE SOURCE DE CHALEUR A UN CIRCUIT THERMODYNAMIQUE COMPORTANT UN MEDIUM DOTE D'AU MOINS DEUX SUBSTANCES A EVAPORATION ET CONDENSATION NON-ISOTHERMES

(30) Priorität: 30.07.2004 DE 102004037417
(43) Veröffentlichungstag der Anmeldung: 11.04.2007
(73) Patentinhaber: Kalina Power Limited, Hawthorn VIC 3122 (AU)
(72) Erfinder: BLONN, Jann, 91056 Erlangen (DE); LENGERT, Jörg, 91475 Lonnerstadt-Ailsbach (DE); RUHSLAND, Kathrin, 91325 Adelsdorf-Aisch (DE)
(74) Vertreter: Stork Bamberger Patentanwälte PartmbB
(86) Internationale Anmeldenummer: PCT/EP2005/053690
(87) Internationale Veröffentlichungsnummer: WO 2006/013186

(56) Entgegenhaltungen:
- EP-A- 1 306 526
- DE-A1-102004 006 837
- BIES D: "VERDICHTUNGSLUFTKUEHLUNG MIT ABSORPTIONSKAELTETECHNIK" BWK BRENNSTOFF WARME KRAFT, SPRINGER VDI VERLAG, DUSSELDORF, DE, Bd. 56, Nr. 6, 2004, Seiten 66-70, XP001196599 ISSN: 1618-193X
- GAJEWSKI W ET AL: "DER KALINA-PROZESS" VGB KRAFTWERKSTECHNIK, VGB KRAFTWERKSTECHNIK GMBH. ESSEN, DE, Bd. 69, Nr. 5, 1. Mai 1989 (1989-05-01), Seiten 477-483, XP000028691 ISSN: 0372-5715

## Beschreibung

Verfahren und Vorrichtung zur Übertragung von Wärme von einer Wärmequelle an einen thermodynamischen Kreislauf mit einem Arbeitsmittel mit zumindest zwei Stoffen mit nicht-isothermer Verdampfung und Kondensation.

Die Erfindung bezieht sich auf ein Verfahren und eine Vorrichtung zur Übertragung von Wärme von einer Wärmequelle an einen thermodynamischen Kreislauf mit einem Arbeitsmittel mit zumindest zwei Stoffen mit nicht-isothermer Verdampfung und Kondensation.

Für Wärmequellen mit Temperaturen von 100°C bis 200°C wurden in den letzten Jahren verschiedenste Technologien entwickelt, die es ermöglichen, deren Wärme mit gutem Wirkungsrad in mechanische oder elektrische Energie umzuwandeln. Hierbei zeichnen sich vor allem thermodynamische Kreisläufe mit einem Arbeitsmittel mit zumindest zwei Stoffen mit nicht-isothermer Verdampfung und Kondensation wie z.B. der Kalina-Kreislauf durch besonders gute Wirkungsgrade aus. Kalina-Kreisläufe, wie sie z.B. aus der EP 0652 368 B1 bekannt sind, verwenden als Arbeitsmittel ein Gemisch aus Ammoniak und Wasser, wobei der nicht-isotherme Siede- und Kondensationsvorgang des Gemisches ausgenutzt wird, um den Wirkungsgrad des Kreislaufes z.B. gegenüber dem klassischen Rankine-Kreislauf zu erhöhen.

Da sich die verwendeten Arbeitsmittel allerdings ab einer bestimmten Temperatur (im Folgenden als "Zersetzungstemperatur" bezeichnet) zersetzen können, gestaltet sich die Verwendung solcher Kreisläufe bei Wärmequellen mit Temperaturen oberhalb der Zersetzungstemperatur als schwierig. Im Fall des Kalina-Kreislaufes mit einem Ammoniak-Wasser-Gemisch als Arbeitsmittel beginnt sich das Ammoniak-Wasser-Gemisch ab 250°C zu zersetzen, d.h. es kommt zu einem chemischen Auseinanderbrechen der NH3-Verbindung (2 NH3 -> N2 + 3H2), so dass Wasserstoff und Stickstoff freigesetzt werden. Ab Temperaturen von 400°C funktioniert der Kreislauf deshalb nicht mehr.

Auf der anderen Seite ist jedoch in speziellen Fällen die Verwendung solcher Kreisläufe auch für Wärmequellen mit Temperaturen von über 400°C interessant. Dies gilt z.B. für in der Vergangenheit errichtete Gasturbinenanlagen ohne Dampferzeugung sowie für GuD-Anlagen. Aufgrund enormen Kostendrucks sind insbesondere die Betreiber von Altanlagen mit geringen Wirkungsgraden dazu gezwungen, die Wirtschaftlichkeit ihrer Anlagen zu verbessern.

Aus der EP 1 306 526 A1 ist ein Leistungsgenerator bekannt, bei dem Wasserstoff-absorbierende Legierungen und Hitze von mittlerer bis niederer Temperatur verwendet werden.

Aus der Veröffentlichung "Verdichtungsluftkühlung mit Absorptionskältetechnik" von Dietmar Bies, erschienen im Jahr 2004 in BWK, Bd. 56, Nr. 6, Seiten 66-70, ISSN 1618-193X, wird eine Anlage für einen Gasturbinenprozess offenbart, welche eine Hochleistungskältemaschine auf der Basis von Lithium-Bromid umfasst.

Es ist deshalb Aufgabe vorliegender Erfindung, ein Verfahren und eine Vorrichtung zur Übertragung von Wärme von einer Wärmequelle an einen thermodynamischen Kreislauf mit einem Arbeitsmittel mit zumindest zwei Stoffen mit nicht-isothermer Verdampfung und Kondensation anzugeben, die es ermöglichen, mit geringem Aufwand und hoher Betriebssicherheit die Wärme von Wärmequellen mit Temperaturen auch über der Zersetzungstemperatur des Arbeitsmittels des Kreislaufes nutzbar zu machen.

Die Lösung der auf das Verfahren gerichteten Aufgabe gelingt erfindungsgemäß durch ein Verfahren gemäß Patentanspruch 1. Vorteilhafte Ausgestaltungen des Verfahrens sind Gegenstand der Unteransprüche 2 bis 8. Die Lösung der auf die Vorrich tung gerichteten Aufgabe gelingt durch eine Vorrichtung gemäß Patentanspruch 9. Vorteilhafte Ausgestaltungen der Vorrichtung sind Gegenstand der Unteransprüche 10 bis 16. Eine Gasturbinenanlage mit einer derartigen Vorrichtung ist Gegenstand des Patentanspruchs 17.

Bei dem erfindungsgemäßen Verfahren wird die Wärme der Wärmequelle in einem ersten Schritt an einen Heißflüssigkeitskreislauf und in einem zweiten Schritt von dem Heißflüssigkeitskreislaufes an den Kreislauf mit dem Arbeitsmittel mit zumindest zwei Stoffen mit nicht-isothermer Verdampfung und Kondensation übertragen. Durch die Zwischenschaltung des Heißflüssigkeitskreislaufes zwischen die Wärmequelle und den Kreislauf mit dem Arbeitsmittel mit zwei Stoffen mit nicht-isothermer Verdampfung und Kondensation kann die Temperatur der Wärmequelle soweit herabgesetzt werden, so dass eine Überhitzung des Arbeitsmittels mit den zumindest zwei Stoffen mit nicht-isothermer Verdampfung und Kondensation sicher verhindert werden kann.

Unter einem Heißflüssigkeitskreislauf wird hierbei ein Kreislauf mit einer heißen Flüssigkeit wie z.B. ein Heißwasserkreislauf verstanden.

Durch den zwischengeschalteten Heißflüssigkeitskreislauf kann weiterhin auf einfache Weise eine Anpassung des Kreislaufes mit dem Arbeitsmittel mit zwei Stoffen mit nicht-isothermer Verdampfung und Kondensation an Wärmequellen unterschiedlicher Temperatur erfolgen. Hierdurch wird es möglich, eine standardisierte und somit kostengünstige Lösung für den Kreislauf mit dem Arbeitsmittel mit den zumindest zwei Stoffen mit nicht-isothermer Verdampfung und Kondensation für eine Vielzahl von Anwendungsfällen, d.h. Wärmequellen unterschiedlicher Temperatur, zu verwenden. Die Anpassung dieser standardisierten Lösung an die verschiedenen Wärmequellen erfolgt dann alleine über den zwischengeschalteten Heißflüssigkeitskreislauf.

Bei dem Kreislauf mit dem Arbeitsmittel mit den zumindest zwei Stoffen mit nicht-isothermer Verdampfung und Kondensation handelt es sich bevorzugt um einen Kalina-Kreislauf, wobei als Arbeitsmittel ein Zweistoffgemisch aus Ammoniak und Wasser verwendet wird.

Gemäß einer vorteilhaften Ausgestaltung des erfindungsgemäßen Verfahrens weist die Temperatur der Flüssigkeit in dem Heißflüssigkeitskreislauf in etwa die Verdampfungstemperatur des Arbeitsmittels mit den zumindest zwei Stoffen mit nicht-isothermer Verdampfung und Kondensation auf. Unter "in etwa" wird hierbei verstanden, dass die Temperatur nur max. 5 % von der Verdampfungstemperatur abweicht.

Die erfindungsgemäße Vorrichtung zur Übertragung von Wärme von einer Wärmequelle an einen thermodynamischen Kreislauf, der ein Arbeitsmittel mit zumindest zwei Stoffen mit nicht-isothermer Verdampfung und Kondensation aufweist, weist einen Heißflüssigkeitskreislauf mit einem ersten Wärmetauscher zur Übertragung der Wärme der Wärmequelle an den Heißflüssigkeitskreislauf und einen zweiten Wärmetauscher zur Übertragung der Wärme von dem Arbeitsmittel des Heißflüssigkeitskreislauf an den Kreislauf mit dem Arbeitsmittel mit zwei Stoffen mit nicht-isothermer Verdampfung und Kondensation auf.

Die für das erfindungsgemäße Verfahren genannten Vorteile gelten entsprechend auch für die erfindungsgemäße Vorrichtung.

Eine besonders vorteilhafte Verwendung des erfindungsgemäßen Verfahrens und der erfindungsgemäßen Vorrichtung ergibt sich bei einer Gasturbinenanlage. Hierdurch kann die in den Abgasen der Gasturbine enthaltene Restwärme durch Übertragung an einen Kreislauf mit einem Arbeitsmittel mit zumindest zwei Stoffen mit nicht-isothermer Verdampfung und Kondensation nutzbar gemacht werden, wobei die Wärme direkt aus den 400°C - 650°C heißen Abgasen der Gasturbine ohne Gefahr einer Überhitzung des Arbeitsmittels ausgekoppelt werden kann. Damit bieten sich neue Möglichkeiten, die Wirkungsgrade neuer, insbesondere aber auch alter Gasturbinen- und GuD-Anlagen zu verbessern.

Zur Verbesserung des Wirkungsgrades bei bestehenden Anlagen muss beispielsweise nur ein Heißwasserkreislauf und ein Kalina-Kreislauf nachgerüstet werden. Offene Gasturbinenanlagen können direkt mit dem Heißwasserkreislauf und dem Kalina-Kreislauf nachgerüstet werden. Bei bestehenden GuD-Anlagen kann der Dampfkreislauf durch den Heißwasserkreislauf und den Kalina-Kreislauf ersetzt werden. Die Wärme der Rauchgase der Gasturbine kann somit mit hohem Wirkungsgrad zur Stromerzeugung genutzt werden. Die Wärme des Heißwasserkreislaufes kann ferner zur Fernwärmeversorgung genutzt werden. Bei gleicher Brennstoffmenge ist somit eine höhere elektrische oder mechanische Leistung und damit ein höherer Wirkungsgrad der Gasturbinenanlage möglich. Weiterhin führt dies zu einer Reduktion des CO2-Ausstosses je erzeugter kWh elektrischer Energie.

Bei Gasturbinenanlagen ist die Wirkungsgraderhöhung hierbei ohne Eingriffe in die Hauptanlage möglich, da lediglich abgasseitig, d.h. im Abgasstrang der Gasturbinenanlage, der Wärmetauscher des Heißwasserkreislaufes installiert werden muss. Die Nachrüstung dieses Wärmetauschers, des Heißwasserkreislaufes und des Kalina-Kreislaufes ist daher im Rahmen einer Revision der Hauptanlage mit geringem Aufwand möglich.

Die Temperatur des Heißwassers und somit der Druck in dem Heißwasserkreislauf kann hierbei mit beispielsweise 200 - 220°C bei 15 bis 25 bar in Bereichen liegen, die wesentlich geringer sind als bei den üblichen Frischdampfbedingungen (beispielsweise 500°C bei 100 bar). Hierdurch sind die Anforderungen an die einzusetzenden Materialien wesentlich geringer, was mit erheblichen Kostenvorteilen verbunden ist.

Die Erfindung sowie weitere vorteilhafte Ausgestaltungen der Erfindung gemäß Merkmalen der Unteransprüche, werden im Folgenden anhand von Ausführungsbeispielen in den Figuren näher erläutert. Es zeigen:
- FIG 1:: eine prinzipielle Darstellung einer erfindungsgemäßen Vorrichtung, wobei als Wärmequelle heiße Abgase einer Gasturbine verwendet werden und
- FIG 2:: eine vereinfachte Schaltung zur Erläuterung einer Wär meübertragung von den Abgasen einer Gasturbine über einen Heißwasserkreislauf an einen Kalina-Kreislauf.

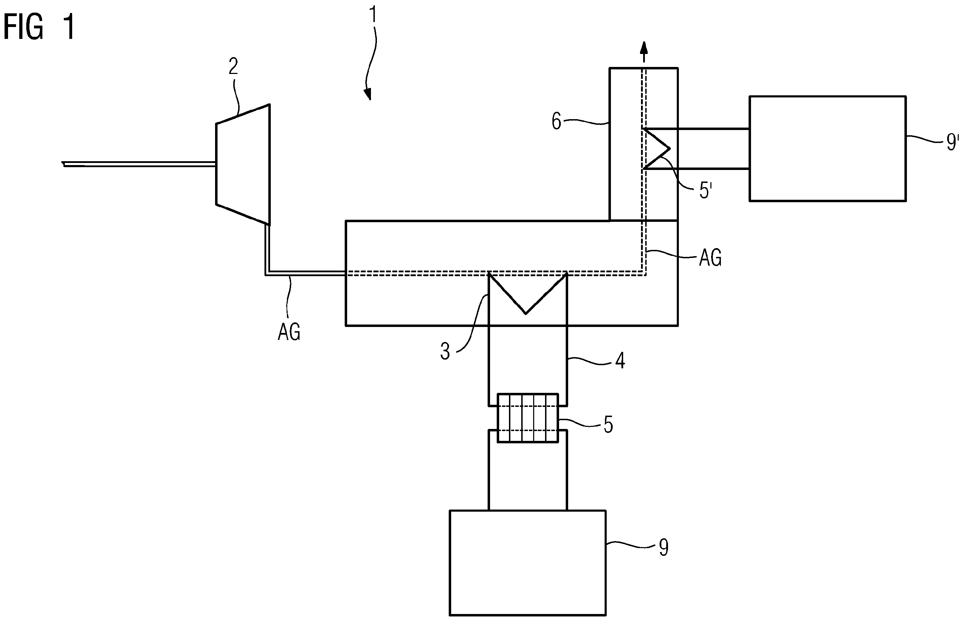

Die Figur 1 zeigt in prinzipieller und vereinfachter Darstellung eine Gasturbinenanlage 1 mit einer in einem offenen Gasturbinenprozess betriebenen Gasturbine 2 und einem in einem Abgasstrang der Gasturbine 2 angeordneten, d.h. von heißen Abgasen AG der Gasturbine 2 durchströmten ersten Wärmetauscher 3 zur Übertragung von Wärme der Abgase AG an Wasser eines geschlossenen Heißwasserkreislauf 4. Durch die Wärmeübertragung wird das Wasser des Heißwasserkreislaufes erhitzt.

In den Heißwasserkreislauf 4 ist weiterhin ein zweiter Wärmetauscher 5 zur Übertragung von Wärme des Heißwasserkreislaufes an einen Kalina-Kreislauf 9 geschaltet.

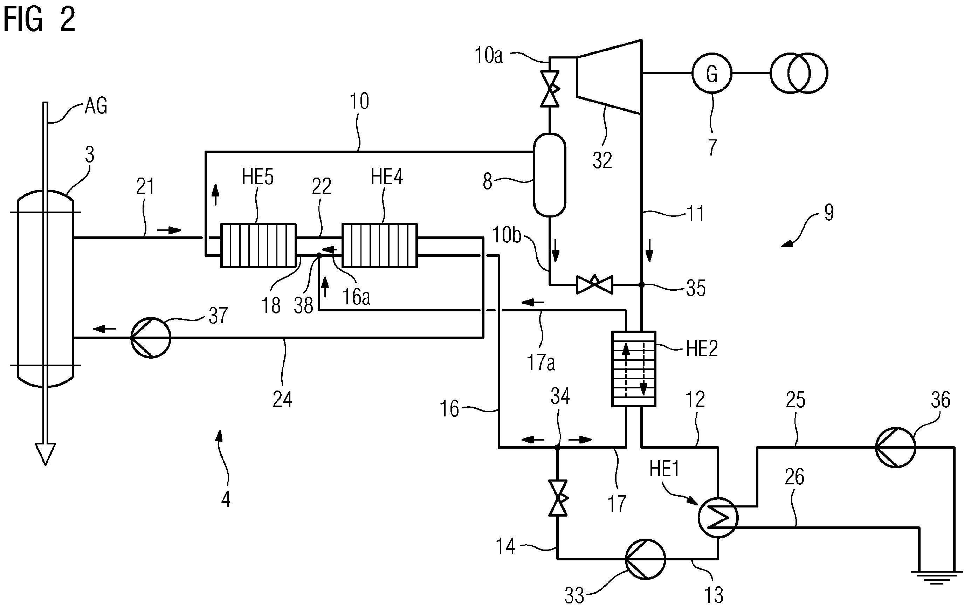

Statt nur eines einzigen Wärmetauschers 3 können natürlich - wie im Fall der FIG 2 - auch mehrere Wärmetauscher zur Wärmeübertragung von dem Heißwasserkreislauf 4 in den Kalina-Kreislauf 9 vorgesehen sein. Der Kalina-Kreislauf weist als Arbeitsmittel ein Zweistoff-Gemisch aus Wasser und Ammoniak auf, wobei das Wasser als Lösungsmittel dient. Durch die Wärmeübertragung von dem Heißwasserkreislauf 4 in den Kalina-Kreislauf 9 wird - wie im Zusammenhang mit FIG 2 im Detail erläutert - das Arbeitsmittel des Kalina-Kreislaufes 9 in dem Wärmetauscher 5 zumindest teilweise verdampft.

Es wird somit zumindest ein Teil der Wärme der Abgase AG der Gasturbine 2 in einem ersten Schritt über den Wärmetauscher 3 an das Wasser des Heißwasserkreislaufs 4 und in einem zweiten Schritt von dem Wasser des Heißwasserkreislaufs 4 über den Wärmetauscher 5 an das Arbeitsmittel des Kalina-Kreislaufes 9 übertragen, wo sie durch Umwandlung in mechanische oder elektrische Energie nutzbar gemacht wird.

Die Abgase AG weisen hierbei eine Temperatur von 400°C bis 650°C und somit eine Temperatur auf, die höher als die Zersetzungstemperatur des Ammoniak-Wasser-Gemisches des Kalina-Kreislaufes 9 ist, die etwa 250°C beträgt.

Das Wasser des Heißwasserkreislaufes weist bei 15 - 25 bar eine Temperatur von 200°C - 220°C und somit etwa die Verdampfungstemperatur des Arbeitsmittels des Kalina-Kreislaufes auf.

Der Heißwasserkreislauf 4 kann Bestandteil einer Fernwärmeversorgungsanlage zur Fernwärmeversorgung von privaten oder öffentlichen Einrichtungen sein, womit der Wirkungsgrad der Gasturbinenanlage 1 weiter erhöht werden kann.

Der Kalina-Kreislauf 9 kann hierbei als standardisierte Lösung ausgebildet sein, die auf eine vordefinierte Temperatur im Wärmetauscher 5 ausgelegt ist. Die Anpassung des Kalina-Kreislaufes 9 an die Temperatur der Abgase AG erfolgt über den Heißwasserkreislauf 4. Durch die Dimensionierung des Heißwasserkreislaufes und/oder dessen Betriebsweise, z.B. über dessen Druck und Wasservolumenstrom, wird die gewünschte vordefinierte Temperatur am Wärmetauscher 5 eingestellt.

Weiter in den Abgasen AG enthaltene Restwärme, kann über einen weiteren Kalina-Kreislauf 9' nutzbar gemacht werden. Hierzu ist in einem Abluftkamin 6 der Gasturbinenanlage 1 ein weiterer Wärmetauscher 5' zur Übertragung von in dem Abgas AG verbliebener Wärme an den Kalina-Kreislauf 9' angeordnet. Da die Abgase AG in dem Abluftkamin 7 nur noch eine Temperatur von 100 bis 200°C aufweisen, kann die Wärmeübertragung ohne Zwischenschaltung eines Heißwasserkreislaufes direkt von dem Wärmetauscher 5' in den Kalina-Kreislauf 9' erfolgen. Hierdurch kann die noch in den Abgasen enthalten Restwärme für die Erzeugung mechanischer oder elektrischer Energie nutzbar gemacht und somit die Rauchgastemperatur auf 50 bis 70°C abgesenkt werden.

Anhand von FIG 2 soll nun detaillierter die Übertragung von Wärme der Abgase AG der Gasturbine 2 an den Kalina-Kreislauf 9 und deren Nutzbarmachung durch Erzeugung elektrischer Energie in dem Kalina-Kreislauf 9 erläutert werden.

Der Heißwasserkreislauf 4 weist eine Heißwasserpumpe 37, einen als Heißwassererzeuger ausgebildeten Wärmetauscher 3 und zwei in den Heißwasserkreislauf 4 geschaltete Wärmetauscher HE4, HE5 auf. Der Wärmetauscher 3 wird von den Abgasen (Rauchgasen) AG einer Gasturbine durchströmt und ist zum einen mit der Heißwasserpumpe 37 und zum anderen mit dem Wärmetauscher HE5 verbunden. Der Wärmetauscher HE5 ist primärseitig wiederum mit dem Wärmetauscher HE4 verbunden, der wiederum mit der Heißwasserpumpe 37 über eine Verbindungsleitung 24 verbunden ist.

Die Heißwasserpumpe 37 treibt Wasser durch den Wärmetauscher 3, wo es durch die heißen Abgase AG bei 15 bis 25 bar auf 200 bis 220°C erhitzt wird. Das heiße Wasser fließt als Heißwasserstrom 21 bzw. 22 anschließend durch die Primärseiten der Wärmetauscher HE5 und HE4, wo es abgekühlt wird und den Wärmetauscher HE4 als abgekühlter Heißwasserstrom 24 verlässt und wieder zur Heißwasserpumpe 37 zurückfließt.

Der Kalina-Kreislauf 9 weist den bereits erwähnten Wärmetauscher HE5 auf, der primärseitig von dem Heißwasserstrom 21 des Heißwasserkreislaufes 4 durchströmt wird und sekundärseitig zum einen mit einem Mischer 38 und zum anderen über einen Abscheider 8 mit einer Turbine 32 verbunden ist. Die Turbine 32 ist ausgangsseitig mit der Sekundärseite eines Wärmetauschers HE2 verbunden, welche wiederum mit der Primärseite eines Wärmetauschers (Kondensators) HE1 verbunden ist. Der Kondensator HE1 ist an seinem primärseitigen Ausgang, gegebenenfalls über einen Kondensattank, über eine Pumpe 33 mit einem Teiler 34 verbunden. Der Teiler 34 ist zum einen über die Primärseite des Wärmetauschers HE2 und zum anderen über die Sekundärseite des Wärmetauschers HE4 mit dem Mischer 38 verbunden.

Als Arbeitsmittel wird in dem Kalina-Kreislauf 9 ein Zweistoffgemisch aus Wasser und Ammoniak verwendet. Das Arbeitsmittel liegt nach dem Kondensator HE1 in einem flüssigen Zustand als flüssiger Arbeitsmittelstrom 13 vor. Mit Hilfe der Pumpe 33 wird der flüssige Arbeitsmittelstrom 13 auf einen erhöhten Druck gepumpt und ein druckbeaufschlagter, flüssiger Arbeitsmittelstrom 14 erzeugt, der durch den Teiler 34 in einen ersten Teilstrom 16 und einen zweiten Teilstrom 17 aufgeteilt wird.

Der erste Teilstrom 16 wird sekundärseitig von dem Wärmetauscher HE4 aufgenommen und unter Verwendung von Wärme, die durch Abkühlung des bereits in dem Wärmetauscher HE5 abgekühlten Heißwassers 22 des Heißwasserkreislaufs 4 erzeugt wird, teilweise verdampft und ein teilweise verdampfter erster Teilstrom 16a erzeugt. Der zweite Teilstrom 17 wird primärseitig von dem Wärmetauscher HE2 aufgenommen und unter Verwendung von Wärme, die durch teilweise Kondensation eines sekundärseitig aufgenommenen entspannten Arbeitsmittelstromes 11 erzeugt wird, teilweise verdampft und ein teilweise verdampfter zweiter Teilstrom 17a erzeugt. Die teilweise verdampften ersten und zweiten Teilströme 16a, 17a werden anschließend in dem Mischer 38 zu einem teilweise verdampften Arbeitsmittelstrom 18 vereinigt. Die Wärmetauscher HE2 und HE4 sind hierbei vorteilhafterweise so dimensioniert, dass der erste und der zweite teilweise verdampfte Teilstrom 16a bzw. 17a in etwa gleiche Temperatur und gleichen Dampfgehalt aufweisen.

Der teilweise verdampfte Arbeitsmittelstrom 18 wird anschließend sekundärseitig von dem Wärmetauscher HE5 aufgenommen, durch Abkühlung des primärseitigen Heißwassers 21 des Heißwasserkreislaufs 4 weiter verdampft und der zumindest teilweise verdampfte Arbeitsmittelstrom 10 erzeugt.

Der teilweise verdampfte Arbeitsmittelstrom 10 wird dem Separator 8 zugeführt, in dem eine dampfförmige Phase 10a von einer flüssigen Phase 10b des teilweise verdampften Arbeitsmittelstroms 10 getrennt wird. Die dampfförmige Phase 10a wird anschließende in der Turbine 2 entspannt, ihre Energie über den Generator 7 in Strom umgewandelt und der entspannte Arbeitsmittelstrom 11 erzeugt. Der entspannten Arbeitsmittelstrom 11 wird, zusammen mit der mit einem Mischer 5 zugeführten flüssigen Phase 10b, in dem Wärmetauscher HE2 teilkondensiert und ein teilkondensierter, entspannter Arbeitsmittelstrom 12 erzeugt. Der teilkondensierte, entspannte Arbeitsmittelstrom 12 wird anschließend in dem Wärmetauscher (Kondensator) HE1 mit Hilfe eines über eine Kühlwasserpumpe 36 zulaufenden Kühlwasserstromes 25 kondensiert und der flüssige Arbeitsmittelstrom 13 erzeugt. Die durch die Kondensation des entspannten Arbeitsmittelstromes 12 an den Kühlwasserstrom 25 übertragene Wärme wird durch den ablaufenden Kühlwasserstrom 26 abgeführt.

Die Erfindung wurde vorstehend anhand bevorzugter Ausführungsbeispiele beschrieben, kann generell aber nicht als auf diese Ausführungsbeispiele beschränkt angesehen werden. Es besteht vielmehr die Möglichkeit einer Vielzahl von Variationen und Modifikationen der Erfindung bzw. dieser Ausführungsbeispiele. Z.B. kann in den Kreisläufen 4 und 9 die Anzahl der Wärmetauscher variiert und es können zusätzliche Ventile und Separatoren in die Schaltung geschaltet werden. Weiterhin kann z.B. der gasförmige Arbeitsmittelstrom 10 in mehr als einem Schritt, z.B. über zwei hintereinander geschaltete Turbinen, entspannt werden. Weiterhin liegt es im Rahmen der Erfindung, dass die Wärmeübertragung von der Wärmequelle an den Kreislauf mit dem Arbeitsmittel mit zumindest zwei Stoffen mit nicht-isothermer Verdampfung und Kondensation statt nur über einen Kreislauf auch über mehrere Kreisläufe erfolgt.

## Patentansprüche

1. Verfahren zur Übertragung von Wärme von einer Wärmequelle (AG) an einen thermodynamischen Kreislauf (9), der ein Arbeitsmittel mit zumindest zwei Stoffen mit nicht-isothermer Verdampfung und Kondensation aufweist,
**dadurch gekennzeichnet, dass** die Wärme der Wärmequelle (AG) in einem ersten Schritt an einen Heißflüssigkeitskreislauf (4) und in einem zweiten Schritt von dem Heißflüssigkeitskreislauf (4) an den Kreislauf (9) mit dem Arbeitsmittel mit zumindest zwei Stoffen mit nicht-isothermer Verdampfung und Kondensation übertragen wird,
wobei durch die Zwischenschaltung des Heißflüssigkeitskreislaufes (4) zwischen die Wärmequelle (AG) und den Kreislauf (9) mit dem Arbeitsmittel mit zwei Stoffen mit nicht-isothermer Verdampfung und Kondensation die Temperatur der Wärmequelle (AG) soweit herabgesetzt werden kann, dass eine Überhitzung des Arbeitsmittels mit den zumindest zwei Stoffen mit nicht-isothermer Verdampfung und Kondensation verhindert werden kann.

2. Verfahren nach Anspruch 1,
**dadurch gekennzeichnet, dass** die Wärmequelle (AG) eine Temperatur aufweist, die höher als eine Zersetzungstemperatur des Arbeitsmittels mit zumindest zwei Stoffen mit nicht-isothermer Verdampfung und Kondensation ist.

3. Verfahren nach einem der vorhergehenden Ansprüche,
**dadurch gekennzeichnet, dass** als Wärmequelle heiße Abgase (AG) einer Gasturbine (2) verwendet werden.

4. Verfahren nach einem der vorhergehenden Ansprüche,
**dadurch gekennzeichnet, dass** die Flüssigkeit des Heißflüssigkeitskreislaufes (4) in etwa die Verdampfungstemperatur des Arbeitsmittels mit zumindest zwei Stoffen mit nicht-isothermer Verdampfung und Kondensation aufweist.

5. Verfahren nach einem der vorhergehenden Ansprüche,
**dadurch gekennzeichnet, dass** der Kreislauf (9) mit dem Arbeitsmittels mit zumindest zwei Stoffen mit nicht-isothermer Verdampfung und Kondensation ein Kalina-Kreislauf ist.

6. Verfahren nach Anspruch 5, **dadurch gekennzeichnet, dass** das Arbeitsmittel ein Gemisch aus Ammoniak und Wasser ist.

7. Verfahren nach einem der vorhergehenden Ansprüche,
**dadurch gekennzeichnet, dass** der Heißflüssigkeitskreislauf (4) ein Heißwasserkreislauf ist.

8. Verfahren nach Anspruch 7,
**dadurch gekennzeichnet, dass** der Heißwasserkreislauf (4) zur Fernwärmeversorgung benutzt wird.

9. Vorrichtung zur Übertragung von Wärme von einer Wärmequelle (AG) an einen thermodynamischen Kreislauf (9), der ein Arbeitsmittel mit zumindest zwei Stoffen mit nicht-isothermer Verdampfung und Kondensation aufweist,
**gekennzeichnet durch**
einen Heißflüssigkeitskreislauf (4) mit einem ersten Wärmetauscher (3) zur Übertragung der Wärme der Wärmequelle (AG) an den Heißflüssigkeitskreislauf (4) und einem zweiten Wärmetauscher (5) zur Übertragung der Wärme von dem Heißflüssigkeitskreislauf (4) an den Kreislauf (9) mit dem Arbeitsmittel mit zumindest zwei Stoffen mit nicht-isothermer Verdampfung und Kondensation,
wobei durch die Zwischenschaltung des Heißflüssigkeitskreislaufes (4) zwischen die Wärmequelle (AG) und den Kreislauf (9) mit dem Arbeitsmittel mit zwei Stoffen mit nicht-isothermer Verdampfung und Kondensation die Temperatur der Wärmequelle (AG) soweit herabsetzbar ist, dass eine Überhitzung des Arbeitsmittels mit den zumindest zwei Stoffen mit nicht-isothermer Verdampfung und Kondensation verhinderbar ist.

10. Vorrichtung nach Anspruch 9,
**dadurch gekennzeichnet, dass** die Wärmequelle (AG) eine Temperatur aufweist, die höher als eine Zersetzungstemperatur des Arbeitsmittels mit zumindest zwei Stoffen mit nicht-isothermer Verdampfung und Kondensation ist.

11. Vorrichtung nach einem der Ansprüche 9 bis 10,
**dadurch gekennzeichnet, dass** der erste Wärmetauscher (3) in einem Abgasstrom (AG) einer Gasturbine (2) angeordnet ist.

12. Vorrichtung nach einem der Ansprüche 9 bis 11,
**dadurch gekennzeichnet, dass** die Flüssigkeit des Heißflüssigkeitskreislaufes (4) in etwa die Verdampfungstemperatur des Arbeitsmittels mit zumindest zwei Stoffen mit nicht-isothermer Verdampfung und Kondensation aufweist.

13. Vorrichtung nach einem der Ansprüche 9 bis 12,
**dadurch gekennzeichnet, dass** der Kreislauf (9) mit dem Arbeitsmittels mit zumindest zwei Stoffen mit nicht-isothermer Verdampfung und Kondensation ein Kalina-Kreislauf ist.

14. Vorrichtung nach Anspruch 13,
**dadurch gekennzeichnet, dass** das Arbeitsmittel ein Gemisch aus Ammoniak und Wasser ist.

15. Vorrichtung nach einem der Ansprüche 9 bis 14,
**dadurch gekennzeichnet, dass** der Heißflüssigkeitskreislauf (4) ein Heißwasserkreislauf ist.

16. Vorrichtung nach Anspruch 15,
**dadurch gekennzeichnet, dass** der Heißwasserkreislauf (4) Bestandteil einer Fernwärmeversorgungsanlage ist.

17. Gasturbinenanlage (1) mit einer Vorrichtung nach einem der Ansprüche 9 bis 16 zur Übertragung von Wärme von Abgasen (AG) einer Gasturbine (2) an einen thermodynamischen Kreislauf (9) mit einem Arbeitsmittel mit zumindest zwei Stoffen mit nicht-isothermer Verdampfung und Kondensation.

## Claims

1. Method for the transfer of heat from a heat source (AG) to a thermodynamic cycle (9) with a working medium comprising at least two substances with non-isothermal evaporation and condensation,
**characterised in that** the heat from the heat source (AG) is transferred in a first step to a hot liquid cycle (4) and in a second step from the hot liquid cycle (4) to the cycle (9) with the working medium comprising at least two substances with non-isothermal evaporation and condensation,
wherein interconnecting the hot liquid cycle (4) between the heat source (AG) and the cycle (9) with the working medium comprising two substances with non-isothermal evaporation and condensation the temperature of the heat source (AG) may be reduced to the extent that overheating of the working medium comprising at least two substances with non-isothermal evaporation and condensation may be avoided.

2. Method according to claim 1, **characterised in that** the heat source (AG) has a temperature which is higher than a decomposition temperature of the working medium comprising at least two substances with non-isothermal evaporation and condensation.

3. Method according to one of the preceding claims, **characterised in that** hot waste gases (AG) of a gas turbine (2) are used as the heat source.

4. Method according to one of the preceding claims, **characterised in that** the liquid of the hot liquid cycle (4) has substantially the evaporation temperature of the working medium comprising at least two substances with non-isothermal evaporation and condensation.

5. Method according to one of the preceding claims, **characterised in that** the cycle (9) with the working medium comprising at least two substances with non-isothermal evaporation and condensation is a Kalina cycle.

6. Method according to claim 5, **characterised in that** the working medium is a mixture of ammonia and water.

7. Method according to one of the preceding claims, **characterised in that** the hot liquid cycle (4) is a hot water cycle.

8. Method according to claim 7, **characterised in that** the hot water cycle (4) is used for the district heating supply.

9. Device for the transfer of heat from a heat source (AG) to a thermodynamic cycle (9) with a working medium comprising at least two substances with non-isothermal evaporation and condensation,
**characterised by**
a hot liquid cycle (4) with a first heat exchanger (3) for transferring heat from the heat source (AG) to the hot liquid cycle (4) and a second heat exchanger (5) for transferring heat from the hot liquid cycle (4) to the cycle (9) with the working medium comprising at least two substances with non-isothermal evaporation and condensation,
wherein by interconnecting the hot liquid cycle (4) between the heat source (AG) and the cycle (9) with the working medium comprising two substances with non-isothermal evaporation and condensation, the temperature of the heat source (AG) may be reduced to the extent that overheating of the working medium comprising at least two substances with non-isothermal evaporation and condensation is avoidable.

10. Device according to claim 9, **characterised in that** the heat source (AG) has a temperature which is higher than a decomposition temperature of the working medium comprising at least two substances with non-isothermal evaporation and condensation.

11. Device according to one of claims 9 to 10, **characterised in that** the first heat exchanger (3) is arranged in a waste gas stream (AG) of a gas turbine (2).

12. Device according to one of claims 9 to 11, **characterised in that** the liquid from the hot liquid cycle (4) has substantially the evaporation temperature of the working medium comprising at least two substances with non-isothermal evaporation and condensation.

13. Device according to one of claims 9 to 12, **characterised in that** the cycle (9) with the working medium comprising at least two substances with non-isothermal evaporation and condensation is a Kalina cycle.

14. Device according to claim 13, **characterised in that** the working medium is a mixture of ammonia and water.

15. Device according to one of claims 9 to 14, **characterised in that** the hot liquid cycle (4) is a hot water cycle.

16. Device according to claim 15, **characterised in that** the hot water cycle (4) is part of a district heating supply plant.

17. Gas turbine plant (1) having a device according to one of claims 9 to 16 for the transfer of heat from waste gases (AG) of a gas turbine (2) to a thermodynamic cycle (9) with a working medium comprising at least two substances with non-isothermal evaporation and condensation.

## Revendications

1. Procédé de transmission de chaleur d'une source de chaleur (AG) à un circuit thermodynamique (9) qui présente un médium doté d'au moins deux substances à évaporation et condensation non isothermes,
**caractérisé en ce que** la chaleur de la source de chaleur (AG) est transmise dans une première étape à un circuit de fluide chaud (4) et dans une deuxième étape, du circuit de fluide chaud (4) au circuit (9) avec le médium doté d'au moins deux substances à évaporation et condensation non isothermes,
l'interposition du circuit de fluide chaud (4) entre la source de chaleur (AG) et le circuit (9) avec le médium doté de deux substances à évaporation et condensation non isothermes permettant de baisser la température de la source de chaleur (AG) à un niveau tel qu'une surchauffe du médium doté des au moins deux substances à évaporation et condensation non isothermes peut être évitée.

2. Procédé selon la revendication 1, **caractérisé en ce que** la source de chaleur (AG) présente une température qui est supérieure à une température de décomposition du médium doté d'au moins deux substances à évaporation et condensation non isothermes.

3. Procédé selon l'une quelconque des revendications précédentes, **caractérisé en ce que** des gaz chauds d'échappement (AG) d'une turbine à gaz (2) sont utilisés en tant que source de chaleur.

4. Procédé selon l'une quelconque des revendications précédentes, **caractérisé en ce que** le fluide du circuit de fluide chaud (4) présente environ la même température d'évaporation que celle du médium doté d'au moins deux substances à évaporation et condensation non isothermes.

5. Procédé selon l'une quelconque des revendications précédentes, **caractérisé en ce que** le circuit (9) avec le médium doté d'au moins deux substances à évaporation et condensation non isothermes est un cycle de Kalina.

6. Procédé selon la revendication 5, **caractérisé en ce que** le médium est un mélange d'ammoniaque et d'eau.

7. Procédé selon l'une quelconque des revendications précédentes, **caractérisé en ce que** le circuit de fluide chaud (4) est un circuit d'eau chaude.

8. Procédé selon la revendication 7, **caractérisé en ce que** le circuit d'eau chaude (4) est utilisé pour l'alimentation en chauffage à distance.

9. Dispositif de transmission de chaleur d'une source de chaleur (AG) à un circuit thermodynamique (9) qui présente un médium doté d'au moins deux substances à évaporation et condensation non isothermes,
**caractérisé par**
un circuit de fluide chaud (4) doté d'un premier échangeur de chaleur (3) destiné à transmettre la chaleur de la source de chaleur (AG) au circuit de fluide chaud (4), et d'un deuxième échangeur de chaleur (5) destiné à transmettre la chaleur du circuit de fluide chaud (4) au circuit (9) avec le médium doté d'au moins deux substances à évaporation et condensation non isothermes,
l'interposition du circuit de fluide chaud (4) entre la source de chaleur (AG) et le circuit (9) avec le médium doté de deux substances à évaporation et condensation non isothermes permettant de baisser la température de la source de chaleur (AG) à un niveau tel qu'une surchauffe du médium doté des au moins deux substances à évaporation et condensation non isothermes est susceptible d'être évitée.

10. Dispositif selon la revendication 9, **caractérisé en ce que** la source de chaleur (AG) présente une température qui est supérieure à une température de décomposition du médium doté d'au moins deux substances à évaporation et condensation non isothermes.

11. Dispositif selon l'une quelconque des revendications 9 à 10, **caractérisé en ce que** le premier échangeur de chaleur (3) est agencé dans un flux de gaz d'échappement (AG) d'une turbine à gaz (2).

12. Dispositif selon l'une quelconque des revendications 9 à 11, **caractérisé en ce que** le fluide du circuit de fluide chaud (4) présente environ la même température d'évaporation que celle du médium doté d'au moins deux substances à évaporation et condensation non isothermes.

13. Dispositif selon l'une quelconque des revendications 9 à 12, **caractérisé en ce que** le circuit (9) avec le médium doté d'au moins deux substances à évaporation et condensation non isothermes est un cycle de Kalina.

14. Dispositif selon la revendication 13, **caractérisé en ce que** le médium est un mélange d'ammoniaque et d'eau.

15. Dispositif selon l'une quelconque des revendications 9 à 14, **caractérisé en ce que** le circuit de fluide chaud (4) est un circuit d'eau chaude.

16. Dispositif selon la revendication 15, **caractérisé en ce que** le circuit d'eau chaude (4) est une composante d'une installation de chauffage à distance.

17. Installation de turbine à gaz (1) dotée d'un dispositif selon l'une quelconque des revendications 9 à 16 destiné à transmettre la chaleur de gaz d'échappement (AG) d'une turbine à gaz (2) à un circuit thermodynamique (9) avec un médium doté d'au moins deux substances à évaporation et condensation non isothermes.
